# EUROPEAN PATENT APPLICATION

(11) **EP 2 093 995 A1**
(43) Date of publication of application: **26.08.2009**
(21) Application number: 08022044.5
(22) Date of filing: 18.12.2008
(51) Int. Cl.: H04N 1/44

(54) **Image encryption apparatus and image decryption apparatus**

(30) Priority: 21.02.2008 JP 2008040634
(71) Applicant: Fujitsu Limited, Kawasaki-shi, Kanagawa 211-8588 (JP)
(72) Inventor: Nakagata, Shohei, Kawasaki-shi Kanagawa 211-8588 (JP); Anan, Taizo, Kawasaki-shi Kanagawa 211-8588 (JP); Kuraki, Kensuke, Kawasaki-shi Kanagawa 211-8588 (JP); Takahashi, Jun, Kawasaki-shi Kanagawa 211-8588 (JP)
(74) Representative: HOFFMANN EITLE

(57) **Abstract**

Area data indicating an encryption area of image data and level data indicating an authority level for the encryption area are received. Upon being triggered by an input password, an encryption key is generated for each received authority level. Check data to be detected in verifying whether or not the encrypted image data in the encryption area is appropriately decrypted through decryption is implanted in the encryption area. Image encryption is performed on the encryption area where the check data is implanted, by using the encryption key corresponding to the authority level designated for the encryption area. In decryption, all decryption keys corresponding to all authority levels lower than or equal to the set authority level are used to decrypt each encryption area and determines whether or not an appropriate decryption has been performed on the basis of the result of the detection of the check data.

## Description

### BACKGROUND OF THE INVENTION

### 1. Field of the Invention

The present invention relates to an image encryption apparatus for encrypting image data of an arbitrary document and an image decryption apparatus for decrypting encrypted image data.

### 2. Description of the Related Art

With widespread use of computers and advancement of network technologies, data communication has been put to use as means for allowing people to communicate information with each other.

Regarding digital data, technologies for encrypting data have been developed so as to prevent the contents of information from being viewed even the information is passed on to a third party, and such technologies are already used as effective means for preventing information leakage.

Even nowadays, however, in most cases, tangible documents, such as printed materials, are used as means for communication.

It is desired to take measures for preventing information leakage, as with digital data, when such documents contain important information that should not be known by third parties or that should be kept secret. Specific examples of documents for which the measures for information leakage are desired include bills for purchased goods, statements for credit cards and so on, medical charts, school grade reports, and name lists. In fact, it is said that about half of the information leakage occurs from such tangible documents.

Japanese Laid-open Patent Publication No. 7-115552 discusses a technology in which, after a document is read as an image, a designation of arbitrary area of the image is received and image within the designated area is encrypted.

In addition, in Japanese Laid-open Patent Publication No. 7-115552, an encrypting person can set a secrecy level for each area and, in encryption of image data in the area, a different encryption key is used in accordance with the secrecy level.

According to the scheme discussed in Japanese Laid-open Patent Publication No. 7-115552, even a document containing important information may be converted into a document in which image data only within the area of the important information is encrypted.

However, according to the scheme discussed in Japanese Laid-open Patent Publication No. 7-115552, data about scramble code and scramble level for the image data needs to be implanted in the image. When an encrypted image is printed, the implanted data may be added to the document.

As discussed above, implanting the data in the image may provide a clue for decipherment, and thus, there is problem in that the security in information management is insufficient.

### SUMMARY

Accordingly, the present invention has been made to overcome the above discussed problem of the related art. Thus, an object of the present invention is to provide an image encryption apparatus and an image decryption apparatus which can maintain sufficient security in information management while achieving authority management in decryption of image data within encryption areas.

According to an aspect of the present invention, provided is an image encryption apparatus for encrypting image data of a document. The image encryption apparatus includes an area data receiver, a level data receiver, an encryption key generator, and an encryptor. The area data receiver receives area data indicating an encryption area of the document. The level data receiver receives level data indicating an authority level for the encryption area indicated by the area data received by the area data receiver. The encryption key generator generates one or more encryption keys corresponding to authority levels lower than or equal to an authority level for specific data received. The encryptor encrypts the image data of the document within the encryption area with an encryption key corresponding to the authority level for the encryption area.

The image encryption apparatus may further include a check data implanter which implants check data in the image data of the document within the encryption area. The check data is to be detected in verifying whether or not encrypted image data in the encryption area is appropriately decrypted through decryption. In such an arrangement, the encryptor encrypts the image data implanted with the check data.

The encryptor of the image encryption apparatus may divide the encryption area into a plurality of blocks and interchange the image data in the blocks on the basis of the encryption key.

The encryptor of the image encryption apparatus may perform geometric rotation and inversion on the image data in each block on the basis of the encryption key.

The check data implanter of the image encryption apparatus may implant the check data by performing conversion of pixel value on image data at predefined positions in the encryption area so as to form a check pattern in a predefined shape.

The check data implanter of the image encryption apparatus may implant the check data by performing conversion of pixel value on image data at a predefined position in a predefined block among the plurality of blocks.

The check data implanter of the image encryption apparatus may implant a digital watermark as the check data in the image data of the document within the encryption area.

The image encryption apparatus may further include a pixel value converter for performing conversion of pixel value on the encrypted image data of the document within the encryption area. The conversion is performed on spots aligned in a predefined pattern with regularity within the encryption area.

According to another aspect of the present invention, provided is an image decryption apparatus for decrypting encrypted image data. The image decryption apparatus includes a decryption key generator and a decryptor. The decryption key generator generates one or more decryption keys corresponding to authority levels lower than or equal to an authority level for specific data received. The decryptor decrypts the encrypted image data with one or more decryption keys generated by the decryption key generator.

The image decryption apparatus may further include a level determiner, a check data detector, and a data selector. The level determiner determines a maximum authority level. The image decryption apparatus decrypts the encrypted image data of authority levels lower than or equal to the maximum authority level. The decryption key generator generates decryption keys corresponding to all authority levels lower than or equal to the maximum authority level determined by the level determiner. The decryptor decrypts the encrypted image data within an encryption area with each of the decryption keys to generate a set of decrypted image data. The check data detector tries to detect check data from each of the set of decrypted image data, said check data being implanted in the encrypted image data through encryption. The data selector selects, as appropriately decrypted image data for the encryption area, decrypted image data from which the check data has been detected.

The image decryption apparatus may further include a decryption position detector and a pixel value reverse converter. The decryption position detector detects a specific position of each pixel in the encryption area in accordance with an image pattern with regularity. The image pattern has been extracted from the encrypted image data within the encryption area. The pixel value reverse converter performs reverse conversion of pixel value on pixels aligned in the image pattern.

The decryption key generator of the image decryption apparatus may generate the decryption keys on condition that a specific portable storage medium is connected to the image decryption apparatus.

### BRIEF DESCRIPTION OF THE DRAWINGS

Fig. 1 is a diagram illustrating an overview of encryption process of an image encryption apparatus according to an embodiment of the present invention;
Figs. 2A - 2C are diagrams each illustrating an example of check data;
Fig. 3 is a diagram illustrating an overview of decryption process of an image decryption apparatus according to an embodiment of the present invention;
Figs. 4A and 4B are diagrams illustrating detection of check data;
Fig. 5 is a block diagram illustrating a configuration of an image encryption apparatus according to an embodiment of the present invention;
Fig. 6 is a diagram illustrating examples of input and output operations;
Fig. 7 is a diagram illustrating a process performed by an encryption key generator of an image encryption apparatus according to an embodiment of the present invention;
Fig. 8 is a diagram illustrating key lengths of encryption keys;
Fig. 9 is a diagram illustrating a process performed by a scrambler of an image encryption apparatus according to an embodiment of the present invention;
Fig. 10 is a diagram illustrating a process performed by a pixel value converter of an image encryption apparatus according to an embodiment of the present invention;
Fig. 11 is a diagram illustrating a process performed by a marker assignor of an image encryption apparatus according to an embodiment of the present invention;
Fig. 12 is a block diagram illustrating a configuration of an image decryption apparatus according to an embodiment of the present invention;
Fig. 13 is a diagram illustrating a process performed by a decryption key generator of an image decryption apparatus according to an embodiment of the present invention;
Figs. 14A and 14B are diagrams illustrating a process performed by an encryption area identifier of an image decryption apparatus according to an embodiment of the present invention;
Fig. 15 is a diagram illustrating a process performed by a decryption position detector of an image decryption apparatus according to an embodiment of the present invention; and
Fig. 16 is a flowchart illustrating a flow of a process performed by a check data detector of an image decryption apparatus according to an embodiment of the present invention.

### DESCRIPTION OF THE PREFERRED EMBODIMENTS

An image encryption apparatus and an image decryption apparatus according to a preferred embodiment of the present invention will be discussed below in detail with reference to the accompanying drawings.

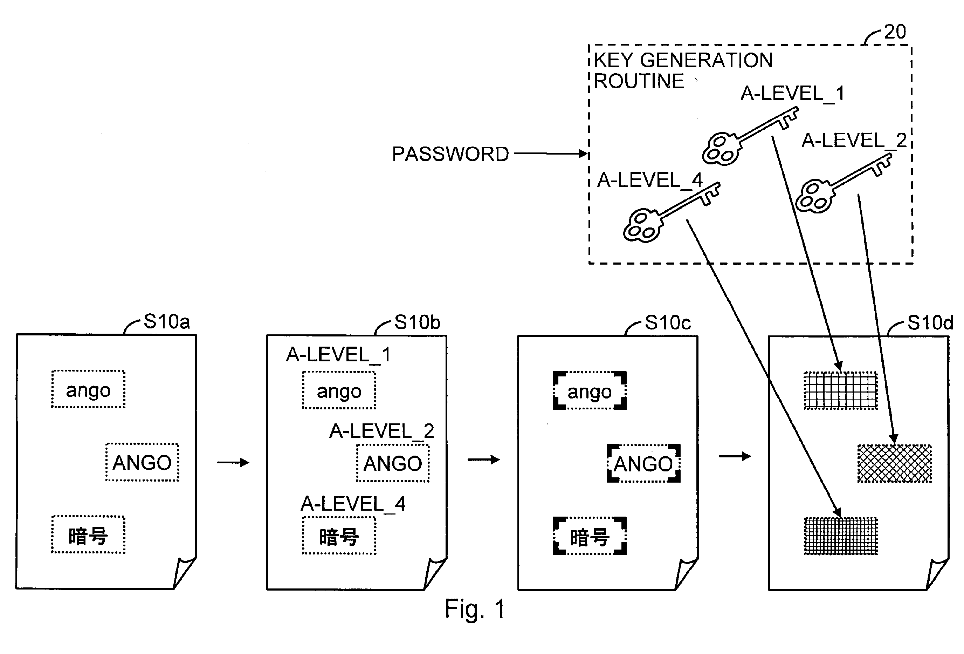

Fig. 1 is a diagram illustrating an overview of encryption process of an image encryption apparatus according to an embodiment of the present invention.

In operation S10a, the image encryption apparatus receives designation of encryption areas of an arbitrary document. In Fig. 1, areas surrounded by dotted lines are designated as the encryption areas. Here, the arbitrary document may be read by reading means such as a scanner to generate image data.

In operation S10b, the image encryption apparatus receives authority levels for the respective encryption areas. The authority levels correspond to, for example, ranks of occupational titles of people who request for decryption of encrypted image data. For example, a person who requests for encryption may set A-LEVEL_1 (authority level 1) indicating a low authority level for one area so that the encrypted image data in that area may be decrypted by anyone of company employees. By contrast, the person may set A-LEVEL_4 (authority level 4) indicating a high authority level for another area so that the encrypted image data in that area may be decrypted by only the president of the company.

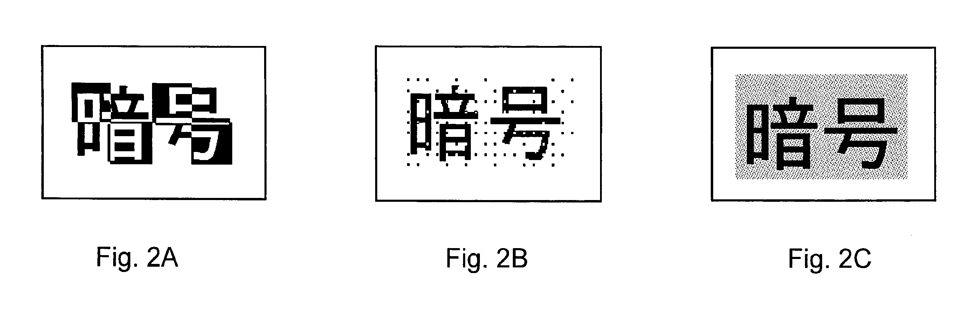

In operation S10c, the image encryption apparatus then implants, in each designated encryption area of the image data, check data to be detected in verifying whether or not the encrypted image data in the encryption area is appropriately decrypted through decryption process. For example, as shown in Fig. 1, the check data may be implanted by converting pixel values of L-shaped areas at four corners of each encryption area. The check data may be implanted in various manners. Figs. 2A - 2C are diagrams each illustrating an example of check data. The check data may be implanted by regularly inverting pixel values as shown in Fig. 2A. The check data may be implanted by dividing the encryption area into small block areas and converting the pixel values of pre-selected block areas as shown in Fig. 2B. Otherwise, a watermark may be implanted in the entire encryption area as shown in Fig. 2C.

In operation S10d, upon being triggered by an input of a password or the like, the image encryption apparatus generates, in accordance with a key generation routine 20, one or more encryption keys corresponding to authority levels lower than or equal to an authority level for the data (e.g., the password) associated with the trigger.

The image encryption apparatus selects an encryption key, from among the generated encryption keys, corresponding to an authority level received in operation S10b for the respective encryption areas, and encrypts the image data in each encryption area with the selected encryption key.

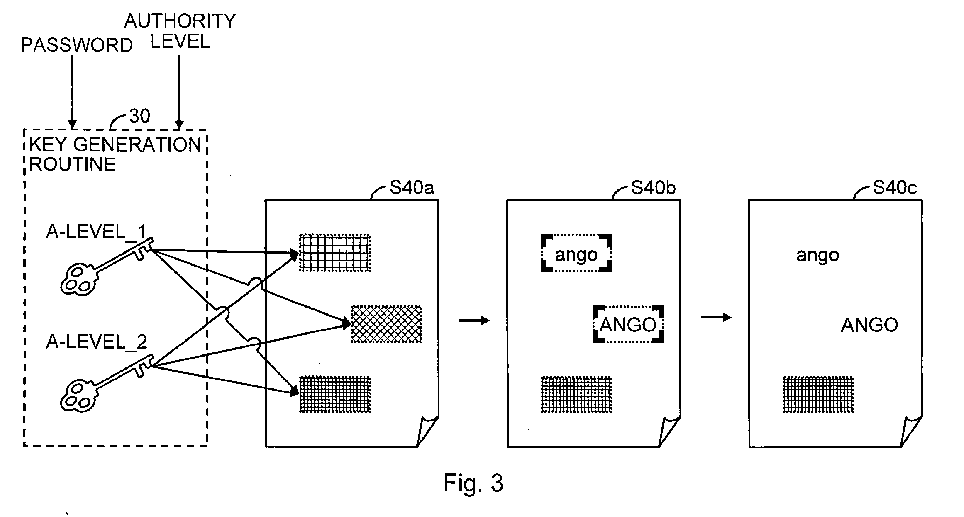

Fig. 3 is a diagram illustrating an overview of decryption process of an image decryption apparatus according to an embodiment of the present invention.

In operation S40a, the image decryption apparatus determines an authority level of a person who requests for decryption of encrypted image data of the document in order to generate a decryption key. The authority level may be determined by, for example, presetting an authority level for the person who requests for decryption, identifying the person with an identification card, a login password, and so on, and reading the authority level preset for the identified person.

Upon being triggered by an input of a password and so on, the image decryption apparatus generates, in accordance with a key generation routine 30, one or more decryption keys depending on the determined authority level. In the example shown in Fig. 3, it is assumed that the authority level of the person is determined to be 2, and two decryption keys are generated, i.e., a decryption key corresponding to A-LEVEL_1 (authority level 1) and a decryption key corresponding to A-LEVEL_2 (authority level 2). The password may be manually input, or may be generated, in case of forgetting of the password, as a result of identification of the person with an identification card, biometric identification, or the like.

Subsequently, the image decryption apparatus tries decryption of the encrypted image data in each of the encryption areas of the document with each of the decryption keys generated.

In operation S40b, the image decryption apparatus determines appropriateness of decryption result. Decryption of the encrypted image data in each encryption area with a correct decryption key allows detection of the check data implanted through encryption. Thus, the image decryption apparatus determines whether or not the check data is detected and adopts only the decrypted image data accompanied with the check data.

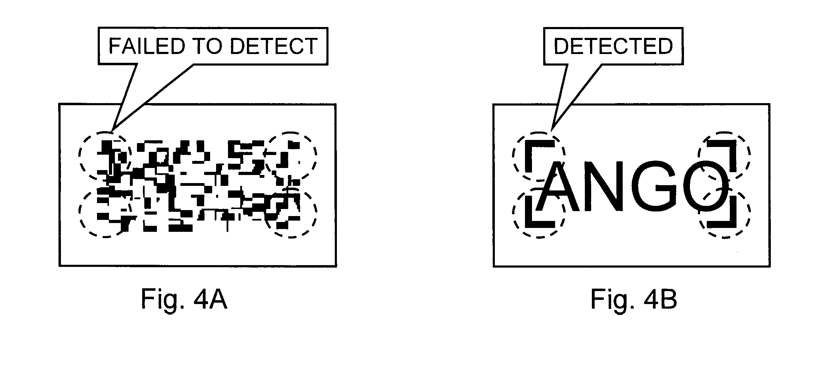

Figs. 4A and 4B are diagrams illustrating detection of check data. Since A-LEVEL_2 (authority level 2) is set for the encryption area containing "ANGO" in Fig. 3, the converted pixel values of the L-shaped areas are not detected when the encrypted image data in the encryption area is decrypted with the decryption key corresponding to A-LEVEL_1 (authority level 1) as shown in Fig. 4A. On the other hand, when decryption is performed on the encryption area with the decryption key corresponding to A-LEVEL_2 (authority level 2), the converted pixel values of the L-shaped areas are detected as shown in Fig. 4B. Thus, the image decryption apparatus determines decryption with the decryption key corresponding to A-LEVEL_2 (authority level 2) is appropriate and adopts decrypted image data thereof as restored image data.

Referring back to Fig. 3, when encrypted image data in an encryption area of A-LEVEL_4 (authority level 4) is decrypted with the decryption keys corresponding to A-LEVEL_1 and A-LEVEL_2 (authority levels 1 and 2), the converted pixel values of the L-shaped areas are not detected. As a result, the image decryption apparatus adopts only the decrypted image data in the encryption areas containing "ango" and "ANGO".

In operation S40c, the image decryption apparatus restores image data in the encryption area with appropriate decryption. The image decryption apparatus removes the check data from the decrypted image data adopted for the encryption areas containing "ango" and "ANGO".

An overview of the encryption process of the image encryption apparatus and the decryption process of the image decryption apparatus has been discussed above. The configuration of each apparatus will be discussed below in detail.

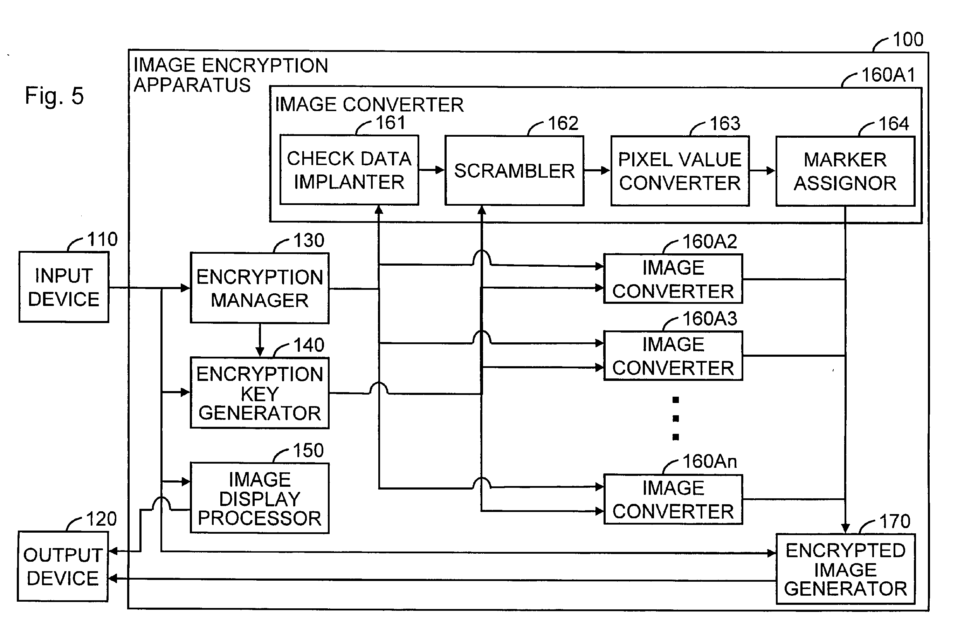

Fig. 5 is a block diagram illustrating a configuration of an image encryption apparatus according to an embodiment of the present invention. As shown in Fig. 5, an image encryption apparatus 100 is connected to an input device 110 and an output device 120 and includes an encryption manager 130, an encryption key generator 140, an image display processor 150, image converters 160A1 to 160An, and an encrypted image generator 170. The number of image converters provided corresponds to the number of different authority levels (e.g., for authority levels 1 to 4, four image converters are provided).

The input device 110 is implemented by a mouse, a keyboard, a scanner, and so on. Through an input operation performed by a person who requests for encryption, the input device 110 inputs, to the image encryption apparatus 100, data required for encryption process, such as image data of an arbitrary document and data that designates one or more encryption areas in the image data.

The output device 120 is implemented by a display unit, a printer, and so on, and displays an image and prints an encrypted image.

The image display processor 150 causes the output device 120 to display the image data of the document read by the input device 110.

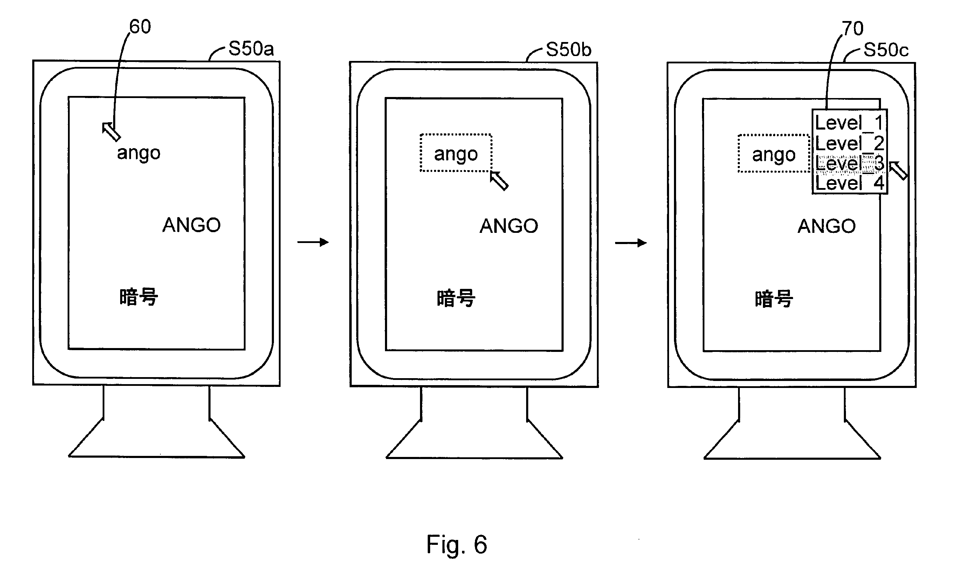

Fig. 6 is a diagram illustrating examples of input and output operations. Examples of input by the input device 110 and examples of output by the output device 120 will now be discussed with reference to Fig. 6.

In operation S50a, a display unit, which is included in the output device 120, displays on a display screen an image of a document read by a scanner which is included in the input device 110. In addition to the image of the document, a pointer 60 is also displayed on the display screen.

In operation S50b, a person who requests for encryption operates a mouse, which is included in the input device 110, to designate an area so that "ango" is contained therein.

In operation S50c, after the designation of the area, a table 70 for selecting an authority level for the designated area is displayed on the display screen. The person who requests for the encryption selects an arbitrary authority level with the mouse and/or a keyboard.

The encryption manager 130 receives area data indicating the designated encryption area(s) in the image and stores authority level data indicating the authority level set for each encryption area.

More specifically, the encryption manager 130 receives the area data and the authority level data from the input device 110 and stores both the data in association with each other. Then, upon completion of the designation of encryption areas, the encryption manager 130 outputs an authority level data indicating a highest authority level among the authority levels indicated by the received authority level data to the encryption key generator 140. The encryption manager 130 also outputs the area data and the authority level data, together with image data of the document received from the input device 110, to the image converters 160A1 to 160An in the order that the area data and the authority level data were received from the input device 110. An image converter to which the data is output varies depending on the authority level. That is, the encryption manager 130 outputs the data corresponding to A-LEVEL_1 (authority level 1) to the image converter 160A1, the data corresponding to A-LEVEL_2 (authority level 2) to the image converter 160A2, and the data corresponding to A-LEVEL_n (authority level n) to the image converter 160An.

The encryption key generator 140 generates encryption keys corresponding to the authority levels received for respective encryption areas in the image data.

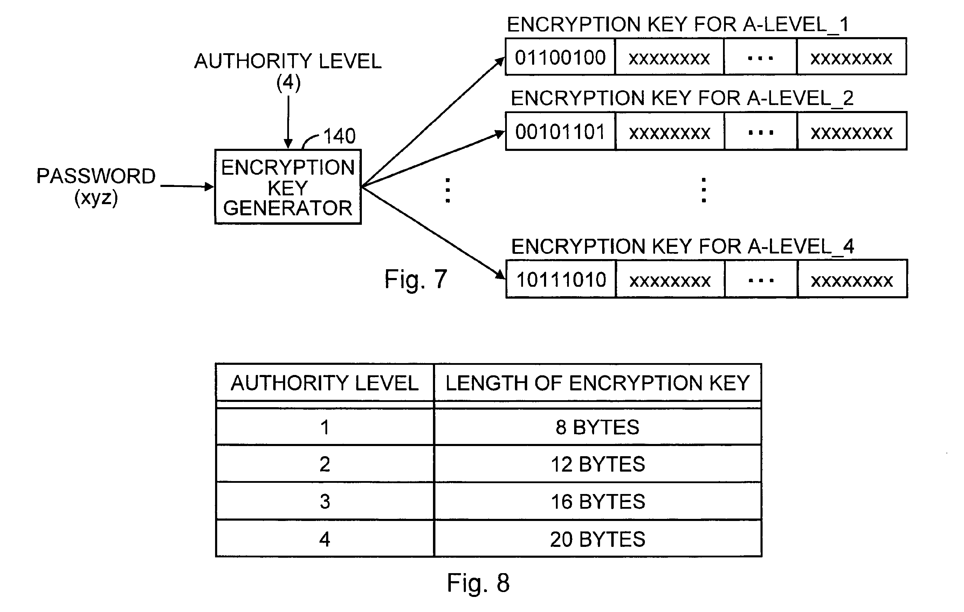

Fig. 7 is a diagram illustrating a process performed by an encryption key generator of an image encryption apparatus according to an embodiment of the present invention. As shown in Fig. 7, upon receiving a password (e.g., "xyz") from the input device 110 and receiving the authority level data (e.g., "4") indicating the highest authority level from the encryption manager 130, the encryption key generator 140 generates encryption keys that are different from each other depending on the authority level from the lowest authority level to the received highest authority level. The encryption key generator 140 then outputs the generated encryption keys to the image converters 160A1 to 160An. An image converter to which the encryption key is output varies depending on the authority level. That is, the encryption key generator 140 outputs the encryption key corresponding to A-LEVEL_1 (authority level 1) to the image converter 160A1, the encryption key corresponding to A-LEVEL_2 (authority level 2) to the image converter 160A2, and the encryption key corresponding to A-LEVEL_n (authority level n) to the image converter 160An. Thus, if only the encryption keys for authority levels up to A-LEVEL_2 (authority level 2) are generated, the encryption key generator 140 does not output any encryption keys to the image converter 160A3 and the subsequent image converters.

Fig. 8 is a diagram illustrating key lengths of encryption keys. In the generation of the encryption keys, as shown in Fig. 8, key lengths may be set for the respective authority levels so that an encryption key having a long key length is generated as the authority level increases, in such a manner that an 8-byte encryption key is generated for A-LEVEL_1 (authority level 1) and a 12-byte encryption key is generated for A-LEVEL_2 (authority level 2).

In the present embodiment, the encryption keys are generated in accordance with a function taking the authority level and the password as arguments. various conversion systems, such as an AES (advanced encryption standard) system and public key encryption system which are widely used as standards for the encryption system, may be applied for the function for generating the encryption keys. In order to prevent the same encryption key from being generated for different sets of arguments (each set being constituted by the authority level and the password), it is desired that the functions for generating the encryption keys and the authority levels correspond to each other on a one-to-one basis.

The image converter 160A1 will now be discussed as a representative for the image converters 160A1 to 160An.

As shown in Fig. 5, the image converter 160A1 includes a check data implanter 161, a scrambler 162, a pixel value converter 163, and a marker assignor 164, to perform image processing on image data of a document.

The check data implanter 161 implants, in each designated encrypted area of the image data, check data to be detected in verifying whether or not the encrypted image data in the area is appropriately decrypted through the decryption thereof.

More specifically, upon receiving the image data of the document and the area data from the encryption manager 130, the check data implanter 161 performs predefined conversion of pixel value on pixels within an area, in the image, indicated by the area data (see Figs. 1 and 2A - 2C). The conversion of pixel value performed in the implantation of the check data may be reversible (on a one-to-one basis) or may be irreversible. However, in particular, when completeness (which means that the pixel values of the decrypted image and the pixel values of the original image must match each other completely) of a decrypted image of a digital image is required, reversible conversion, such as inversion and shifting, is preferable. After the conversion of pixel value, the check data implanter 161 outputs the image data and the area data to the scrambler 162.

The scrambler 162 performs encryption of the image data in each designated encryption area with an encryption key corresponding to the received authority level for the encryption area.

More specifically, upon receiving image data of the document and the area data from the check data implanter 161 and receiving the encryption key from the encryption key generator 140, the scrambler 162 performs encryption of the image data in the corresponding encryption area indicated by the area data with the received encryption key. After the encryption, the scrambler 162 outputs the image data and the area data to the pixel value converter 163.

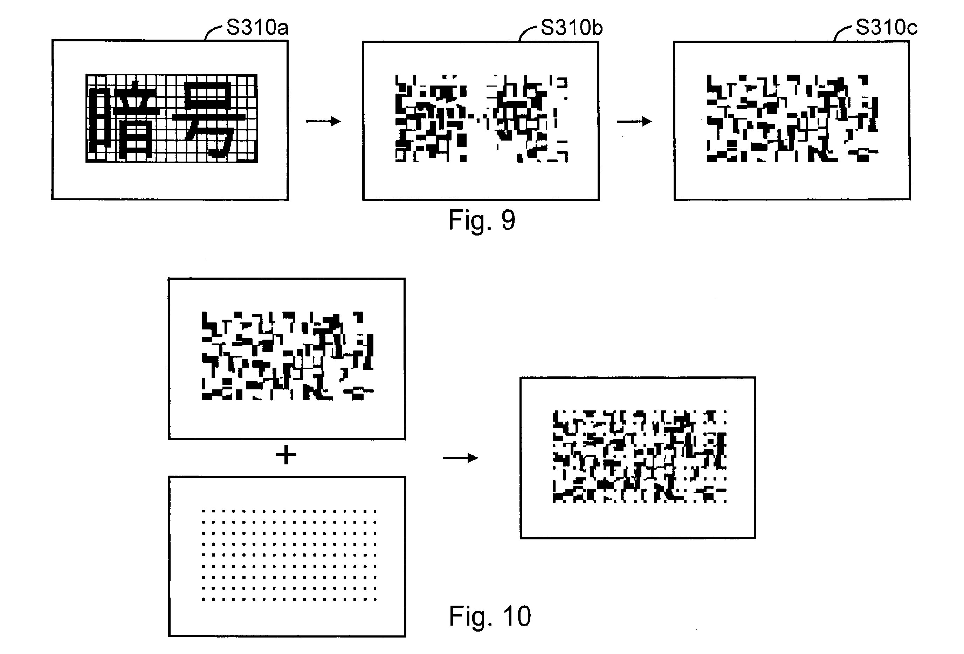

Fig. 9 is a diagram illustrating a process performed by a scrambler of an image encryption apparatus according to an embodiment of the present invention.

In operation S310a, the scrambler 162 divides an encryption area into small block areas.

In operation S310b, the scrambler 162 performs geometric rotation process and inversion process on the image data in each block so that the original appearance of the original image may not be visually recognized.

In operation S310c, the scrambler 162 performs scramble process for interchanging the image data in the blocks.

The rotation process, the inversion process, and the scramble process are executed on the basis of the encryption key.

The pixel value converter 163 converts the pixel values of multiple predefined spots in regular relative position, in the encryption area on which the scrambler 162 performed the encryption. Upon receiving the image data and the area data from the scrambler 162, the pixel value converter 163 performs conversion of pixel value and then outputs the image data and the area data to the marker assignor 164.

A specific image pattern resulting from the conversion of pixel value performed by the pixel value converter 163 is used in decryption as a clue for determining the specific position of the encryption area and makes it possible to perform high image quality decryption even when the encryption area is distorted by printing, scanning, or the like.

Fig. 10 is a diagram illustrating a process performed by a pixel value converter of an image encryption apparatus according to an embodiment of the present invention. When the aforementioned predefined spots are dot spots as shown in Fig. 10, that are aligned at regular intervals in vertical and horizontal directions, the pixel value converter 163 performs conversion of pixel value on the dot spots in the scrambled encryption area. With this arrangement, the specific image pattern is superimposed on the scrambled encryption area.

The marker assignor 164 assigns identification markers to the encryption area of the image data on the basis of the area data. Upon receiving the image data and the area data from the pixel value converter 163, the marker assignor 164 assigns markers to the encryption area and then outputs the image data and the area data to the encrypted image generator 170.

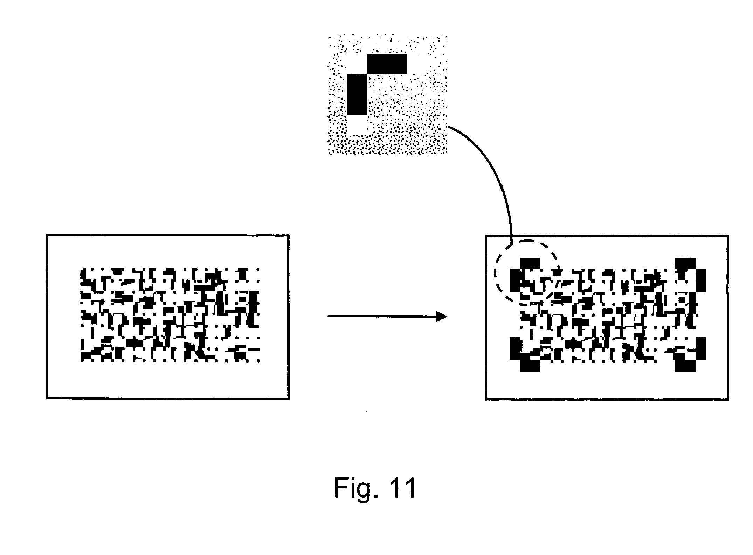

Fig. 11 is a diagram illustrating a process performed by a marker assignor of an image encryption apparatus according to an embodiment of the present invention. An example of the marker for area identification may be a marker having a black-and-white L-shaped rectangular area as shown in Fig. 11. The marker assignor 164 generates image data having the markers arranged at four corners outside the encryption area.

The encrypted image generator 170 generates encrypted image data from the image data received from the image converters 160A1 to 160An.

More specifically, the encrypted image generator 170 obtains, in advance, image data that serves as a base from the input device 110. Since the image data after the image processing and the area data are output from each image converter, the encrypted image generator 170 replaces the image data obtained in advance from the input device 110 with image data output from each image converter in an encryption area indicated by the area data and also assigns the markers. After completing the generation of the encrypted image data, the encrypted image generator 170 outputs the encrypted image data to the output device 120.

The printer or the like included in the output device 120 prints the encrypted image data as an encrypted document.

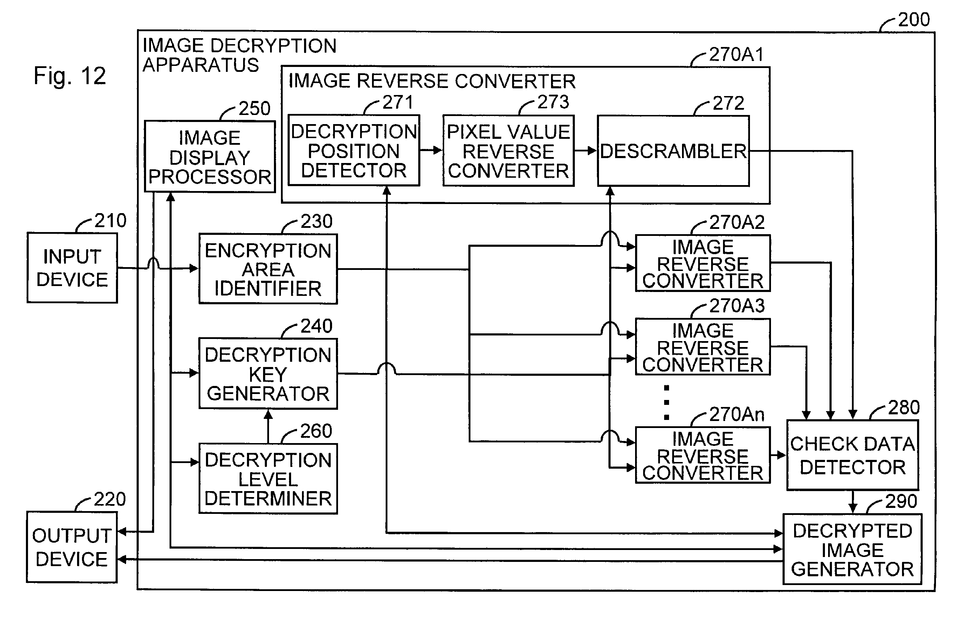

Fig. 12 is a block diagram illustrating a configuration of an image decryption apparatus according to an embodiment of the present invention. As shown in Fig. 12, an image decryption apparatus 200 is connected to an input device 210 and an output device 220 and includes an encryption area identifier 230, a decryption key generator 240, an image display processor 250, a decryption level determiner 260, image reverse converters 270A1 to 270An, a check data detector 280, and a decrypted image generator 290. The number of image reverse converters provided corresponds to the number of different authority levels.

The input device 210 is implemented by a mouse, a keyboard, a scanner, and so on. Through an input operation performed by a person who requests for decryption, the input device 210 inputs an encrypted document image and a password and so on required for login to the image decryption apparatus 200.

The output device 220 is implemented by a display unit, a printer, and so on, and displays an image and prints a decrypted image.

The image display processor 250 causes the output device 220 to display the image data of the document read by the input device 210.

The decryption level determiner 260 determines the authority level of a person who requests for decryption process. As a scheme for determining the authority level, for example, the decryption level determiner 260 may be configured to store, in advance, a table in which login passwords and authority levels are associated with each other, to receive a login password from the input device 210, to search the table for an authority level for the login password received, and to determine the authority level of the person who requests for the decryption process. After the determination of the authority level, the decryption level determiner 260 outputs authority level data to the decryption key generator 240.

The decryption key generator 240 generates one or more decryption keys depending on the authority level of the person who requests for decryption process.

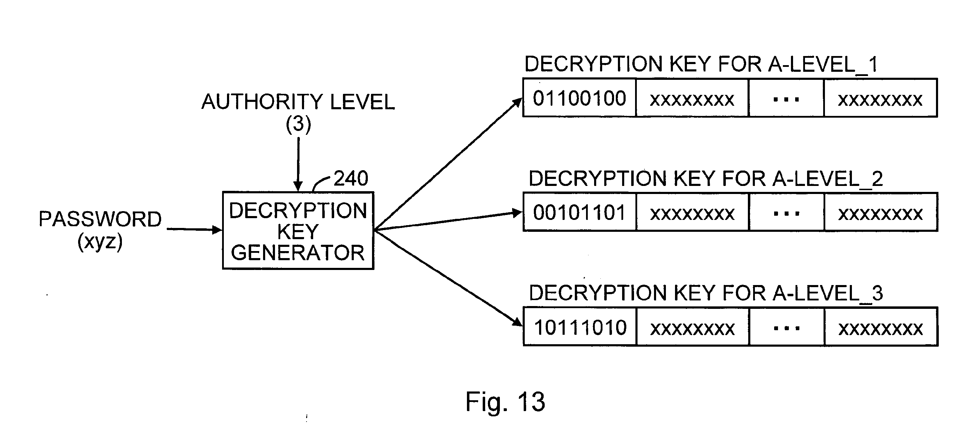

Fig. 13 is a diagram illustrating a process performed by a decryption key generator of an image decryption apparatus according to an embodiment of the present invention. As shown in Fig. 13, upon receiving a password (e.g., "xyz": which is different from the login password) from the input device 210 and receiving the authority level data (e.g., "3") from the decryption level determiner 260, the decryption key generator 240 generates decryption keys, that are different from each other, corresponding to the authority levels from the lowest authority level to the received authority level.

The decryption key generator 240 outputs the generated decryption keys to the image reverse converters 270A1 to 270An in accordance with the authority levels.

For example, when the decryption key generator 240 generates decryption keys for A-LEVEL_1 (authority level 1) to A-LEVEL_3 (authority level 3), it outputs the decryption key for A-LEVEL_1 (authority level 1) to the image reverse converter 270A1, the decryption key for A-LEVEL_2 (authority level 2) to the image reverse converter 270A2, and the decryption key for A-LEVEL_3 (authority level 3) to the image reverse converter 270A3.

To control the operation of the decryption key generator 240, data for causing the decryption key generator 240 to operate may be stored in a portable storage medium. With this arrangement, even when one who does not have the specific portable storage medium attempts to fraudulently generate a decryption key through hacking or the like, he/she cannot generate the decryption key since the decryption key generator 240 does not operate without the specific portable storage medium.

The encryption area identifier 230 identifies an encryption area of the image data. Since the image encryption apparatus 100 of the present embodiment assigns markers as shown in Fig. 11, the encryption area identifier 230 detects the markers by a scheme, such as pattern matching or edge detection, to identify the encryption area.

Each time the encryption area identifier 230 identifies an encryption area, it outputs the image data and area data which indicates the encryption area to each of the image reverse converters 270A1 to 270An.

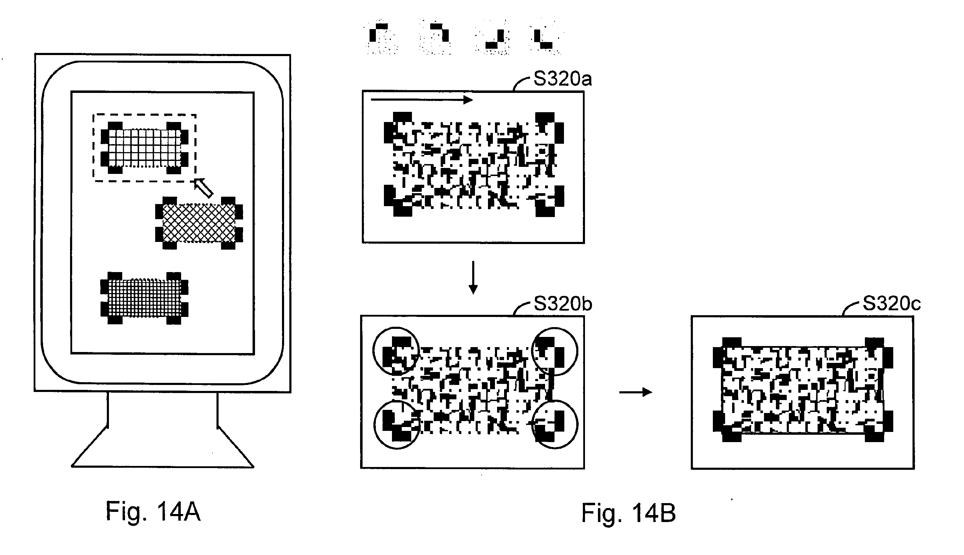

The markers do not necessarily have to be detected from the entire image data. Figs. 14A and 14B are diagrams illustrating a process performed by an encryption area identifier of an image decryption apparatus according to an embodiment of the present invention. As shown in Fig. 14A, the encryption area identifier 230 may receive from the input device 210 area data for an area in which marker detection is performed, through a mouse input operation performed by a person who requests for the decryption.

In operation S320a, the encryption area identifier 230 performs pattern matching on image data within the area indicated by the area data.

In operation S320b, the encryption area identifier 230 detects the markers as a result of the pattern matching.

In operation S320c, the encryption area identifier 230 identifies the encryption area on the basis of the detected markers.

The image reverse converter 270A1 will now be discussed as a representative for the image reverse converters 270A1 to 270An.

As shown in Fig. 12, the image reverse converter 270A1 includes a decryption position detector 271, a pixel value reverse converter 273, and a descrambler 272, to perform image processing on image data of an encrypted document.

The decryption position detector 271 detects the specific position of each pixel in the encryption area identified by the encryption area identifier 230, on the basis of an image pattern generated through conversion of pixel value performed by the pixel value converter 163 during encryption.

More specifically, since the image data and the area data indicating the encryption area are output from the encryption area identifier 230, the decryption position detector 271 recognizes the encryption area of the image data on the basis of the area data and further detects the specific position of each pixel in the encryption area. Then, on the basis of the result of the detection, the decryption position detector 271 performs image processing on the image data in such a manner that an enlarged, reduced, and/or distorted image through printing or scanning is returned to its original state. After the image processing, the decryption position detector 271 outputs the image data and the area data to the pixel value reverse converter 273.

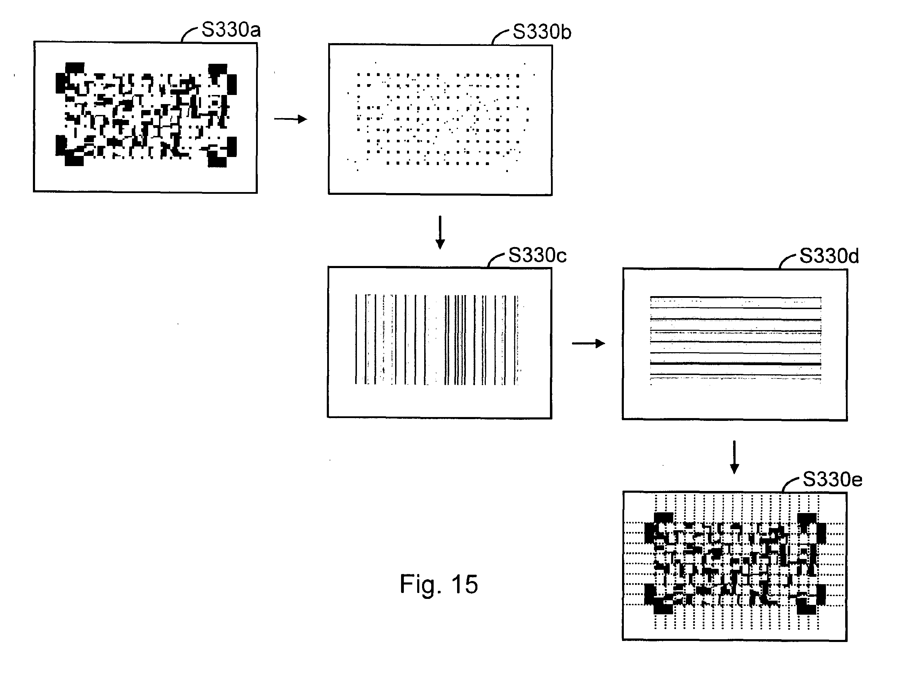

Fig. 15 is a diagram illustrating a process performed by a decryption position detector of an image decryption apparatus according to an embodiment of the present invention. One example of a scheme for detecting the specific position of each pixel in the encryption area will now be discussed with reference to Fig. 15. Here the aforementioned predefined spots are assumed to be dot spots (shown in Fig. 10) that are aligned at regular intervals in the vertical and horizontal directions.

In operation S330a, the decryption position detector 271 applies a filter to image data in an encryption area to extract the dot spots on which the conversion of pixel value was performed.

In operation S330b, the decryption position detector 271 obtains distribution data of the strengths of conversion of pixel value as a result of filtering. Among black dots, a group of dots aligned at regular intervals in the vertical and horizontal directions may be regarded as spots on which the conversion of pixel value was performed.

In operation S330c, the decryption position detector 271 determines horizontal periodicity of the group of dots extracted at a certain period in the horizontal directions. Lines with a strong periodicity are shown by black.

In operation S330d, the decryption position detector 271 determines vertical periodicity of the group of dots extracted at a certain period in the vertical directions.

In operation S330e, the decryption position detector 271 determines the specific position of each pixel in the encryption area. Since lines on which dots are aligned have a strong periodicity, estimating the original positions of the dots in accordance with positions with strong periodicity and the interval thereof allows the determination. Intersections of the dotted lines show the specific positions of the dots in the encryption area.

As an algorithm for estimating the lines on which the dots are aligned, dynamic programming, for example, is effective and also makes it possible efficiently detecting a dot interval expansion or contraction caused by printing, scanning, or the like.

Also, dividing the encryption area into multiple areas and performing the above discussed periodicity determination and the dot position estimation for each divided area makes it possible to more accurately identify a specific position in the encryption area even when the encryption area is distorted by printing, scanning, or the like.

Upon receiving the image data and the area data from the decryption position detector 271, the pixel value reverse converter 273 performs, on the image data, process for returning the pixel values converted through the encryption to their original values. After the reverse conversion of pixel value, the pixel value reverse converter 273 outputs the image data and the area data to descrambler 272.

The descrambler 272 performs decryption of the encrypted data in the encryption area of the image data, by using the decryption key received from the decryption key generator 240.

More specifically, the descrambler 272 receives the decryption key from the decryption key generator 240, receives the image data after the image processing and the area data from the pixel value reverse converter 273, performs descramble process on the basis of the decryption key on image data in an area indicated by the area data. The descrambler 272 then outputs the decrypted image data and the area data to the check data detector 280.

Upon receiving the image data and the area data from the image reverse converters 270A1 to 270An, the check data detector 280 performs detection of check data implanted in areas of the image data on which decryption has been performed, for all the received image data. The check data detector 280 then outputs only image data from which the check data was detected to the decrypted image generator 290.

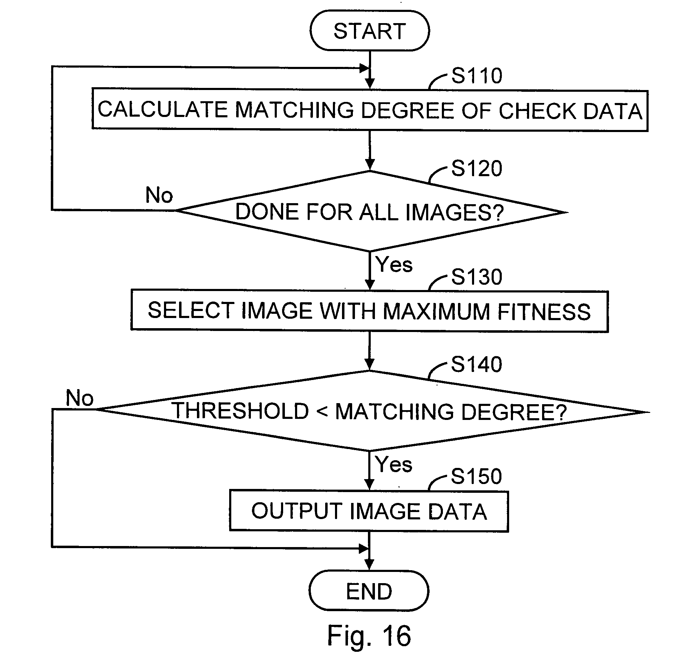

Fig. 16 is a flowchart illustrating a flow of a process performed by a check data detector of an image decryption apparatus according to an embodiment of the present invention. The operations of the check data detector 280 will be specifically discussed with reference to Fig. 16. The operation flow shown in Fig. 16 is repeatedly executed during the operation of the image decryption apparatus 200.

In operation S110, the check data detector 280 determines a matching degree of check data implanted in the target area of the image received from the image reverse converters 270A1 to 270An.

When check data having a specific shape as shown in Fig. 1 is implanted in the target area, pattern matching, for example, may be performed on a position where the check data should be exist as a scheme for determining the matching degree.

In operation S120, the check data detector 280 determines whether or not the matching degrees for all images received from the image reverse converters 270A1 to 270An are determined.

In operation S130, upon determining the matching degrees for all images (operation S120: Yes), the check data detector 280 selects an image having a maximum matching degree.

In operation S140, the check data detector 280 then compares the matching degree of the selected image with a predefined threshold to determine whether or not the matching degree is greater than the threshold.

In operation S150, when the result of the comparison shows that the matching degree is larger than the threshold (operation S140: Yes), the check data detector 280 regards that it has detected the check data, outputs the image data to the decrypted image generator 290, and ends the process. When the matching degree is smaller than or equal to the threshold (operation S140: No), the check data detector 280 does not output the image data to the decrypted image generator 290.

The decrypted image generator 290 uses the image data received from the check data detector 280 to generate decrypted image data.

More specifically, the decrypted image generator 290 obtains, in advance, image data before decryption from the input device 210. Further, each time the encryption area identifier 230 identifies an encryption area, the decrypted image generator 290 obtains the area data from the encryption area identifier 230. When the decrypted image generator 290 receives, from the check data detector 280, restored image data in an area indicated by the area data, the decrypted image generator 290 replaces the image data before decryption obtained in advance from the input device 210 with the image data received from the check data detector 280 in the area indicated by the area data. After completing the generation of the decrypted image data, the decrypted image generator 290 outputs the decrypted image data to the output device 220.

The printer or the like included in the output device 220 prints the decrypted image data as a decrypted document.

The image encryption apparatus 100 implants the same check data in encryption areas regardless of the secrecy levels thereof.

The image decryption apparatus 200 does not specify which decryption key is to be used for each encryption area but performs decryption of the encrypted data in each encryption areas using all decryption keys corresponding to all authority levels that are lower than or equal to the set authority level and determines whether or not an appropriate decryption has been performed on the basis of the result of the detection of the check data.

In the above discussed apparatus, data indicating the authority level that may provide a clue for decipherment is not implanted, thus making it possible to maintain sufficient security in information management.

The elements illustrated in Figs. 5 and 12 show merely functional conceptions and do not necessarily be physically configured as illustrated.

That is, the distribution/integration of the elements in each apparatus is not limited to the specific configuration, and all or some of the elements can be functionally or physically distributed/integrated in any combination in accordance with loads, the usage state, and so on. For example, the scrambler 162 and the pixel value converter 163 may be integrated together.

In addition, all or any of the process functions of the elements may be realized by a CPU (central processing unit) and a program interpreted and executed thereby or may be realized by wired logic based hardware.

## Claims

1. An image encryption apparatus for encrypting image data of a document, comprising:
an area data receiver for receiving area data indicating an encryption area of the document;
a level data receiver for receiving level data indicating an authority level for the encryption area indicated by the area data received by the area data receiver;
an encryption key generator for generating one or more encryption keys corresponding to authority levels lower than or equal to an authority level for specific data received; and
an encryptor for encrypting the image data of the document within the encryption area with an encryption key corresponding to the authority level for the encryption area.

2. The image encryption apparatus of claim 1, further comprising:
a check data implanter for implanting check data in the image data of the document within the encryption area, said check data being detected in verifying whether or not encrypted image data in the encryption area is appropriately decrypted through decryption,
wherein
said encryptor encrypts the image data implanted with the check data.

3. The image encryption apparatus of claim 2, wherein
said encryptor divides the encryption area into a plurality of blocks and interchanges the image data in the blocks on the basis of the encryption key.

4. The image encryption apparatus of claim 3, wherein
said encryptor performs geometric rotation and inversion on the image data in each block on the basis of the encryption key.

5. The image encryption apparatus of claim 2, wherein
said check data implanter implants the check data by performing conversion of pixel value on image data at predefined positions in the encryption area so as to form a check pattern in a predefined shape.

6. The image encryption apparatus of claim 3, wherein
said check data implanter implants the check data by performing conversion of pixel value on image data at a predefined position in a predefined block among the plurality of blocks.

7. The image encryption apparatus of claim 2, wherein
said check data implanter implants a digital watermark as the check data in the image data of the document within the encryption area.

8. The image encryption apparatus of claim 2, further comprising:
a pixel value converter for performing conversion of pixel value on the encrypted image data of the document within the encryption area, said conversion being performed on spots aligned in a predefined pattern with regularity within the encryption area.

9. An image decryption apparatus for decrypting encrypted image data, comprising:
a decryption key generator for generating one or more decryption keys corresponding to authority levels lower than or equal to an authority level for specific data received; and
a decryptor for decrypting the encrypted image data with one or more decryption keys generated by the decryption key generator.

10. The image decryption apparatus of claim 9, further comprising:
a level determiner for determining a maximum authority level, said image decryption apparatus decrypting the encrypted image data of authority levels lower than or equal to the maximum authority level, wherein
said decryption key generator generates decryption keys corresponding to all authority levels lower than or equal to the maximum authority level determined by the level determiner, and
said decryptor decrypts the encrypted image data within an encryption area with each of the decryption keys to generate a set of decrypted image data;
a check data detector for trying to detect check data from each of the set of decrypted image data, said check data being implanted in the encrypted image data through encryption; and
a data selector for selecting, as appropriately decrypted image data for the encryption area, decrypted image data from which the check data has been detected.

11. The image decryption apparatus of claim 10, further comprising:
a decryption position detector for detecting a specific position of each pixel in the encryption area in accordance with an image pattern with regularity, said image pattern being extracted from the encrypted image data within the encryption area; and
a pixel value reverse converter for performing reverse conversion of pixel value on pixels aligned in the image pattern.

12. The image decryption apparatus of claim 10, wherein
said decryption key generator generates the decryption keys on condition that a specific portable storage medium is connected to the image decryption apparatus.

13. An image encryption method executed by an image encryption apparatus for encrypting image data of a document, said method comprising:
receiving area data indicating an encryption area of the document;
receiving level data indicating an authority level for the encryption area indicated by the area data received in the operation of receiving area data;
generating an encryption key corresponding to the authority level indicated by the level data received in the operation of receiving level data;
implanting check data in the image data of the document within the encryption area, said check data being detected in verifying whether or not encrypted image data in the encryption area is appropriately decrypted through decryption; and
encrypting the image data of the document within the encryption area with the encryption key corresponding to the authority level for the encryption area, said image data being implanted with the check data.

14. An image decryption method executed by an image decryption apparatus for decrypting encrypted image data, said method comprising:
determining a maximum authority level, said image decryption apparatus decrypting the encrypted image data of authority levels lower than or equal to the maximum authority level;
generating decryption keys corresponding to all authority levels lower than or equal to the maximum authority level determined in the operation of determining a maximum authority level;
decrypting the encrypted image data within an encryption area with each of the decryption keys to generate a set of decrypted image data;
trying to detect check data from each of the set of decrypted image data, said check data being implanted in the encrypted image data through encryption; and
selecting, as appropriately decrypted image data for the encryption area, decrypted image data from which the check data has been detected.
